# EUROPÄISCHE PATENTANMELDUNG

(11) **EP 1 083 045 A1**
(43) Veröffentlichungstag der Anmeldung: **14.03.2001**
(21) Anmeldenummer: 00110178.1
(22) Anmeldetag: 15.05.2000
(51) Int. Cl.: B41C 1/18, B29C 53/60

(54) **Verfahren und Vorrichtung zur endlosen, kontinuierlichen Fertigung aus Bandmaterial gewickelter Hülsen**

(30) Priorität: 08.09.1999 DE 19942896
(71) Anmelder: Heidelberger Druckmaschinen Aktiengesellschaft, 69115 Heidelberg (DE)
(72) Erfinder: Tittgemeyer, Udo, Lange Wende 19 59494 Soest (DE)
(74) Vertreter: Isenbruck, Günter, Dr.

(57) **Zusammenfassung**

Die Erfindung bezieht sich auf ein Verfahren und eine Vorrichtung zur Herstellung von Hülsen (18) für die graphische Industrie. Es wird mindestens ein bandförmiges Wickelmaterial (9, 10) einem Wickelkern (16) zugeführt. Die Mantelfläche des angetriebenen Wickelkernes (16) ist mit einer Anzahl translatorisch bewegbarer Oberflächensegmente (25) versehen, die zur Ausbildung und zum Vorschub der Hülsenstruktur (18) dienen.

## Beschreibung

Aus dem Stande der Technik, der US 5,301,610 ist eine Vorrichtung und ein Verfahren zur Herstellung spiralförmig gewundener Hülsen für Druckzylinder bekannt geworden. Eine Druckhülse für Flexodruckanwendungen wird hergestellt, indem sprialförmig gewundene, mit einer Haftbeschichtung versehenes bandförmiges Material auf einen Formkern aufgebracht wird, so daß das äußere Bandmaterial den Saum des jeweils inneren Bandmaterials überdeckt. Es erfolgt eine Aufheizung des Formkerns, so daß die thermoplastischen Haftschichten anschmelzen und im Kontaktbereich zwischen zwei Bänderwicklungen eine die Verbindung der Bänder sicherende Spannung entsteht. Die entstehende Hülse wird mittels eines Abziehbandes vom Formkern abgezogen.

US 5,427, 693 bezieht sich auf ein Abwickelmechanismus an einer Wickelmaschine zur Herstellung von Hülsen. Zum Abziehen werden über zwei Bändertrommeln geführte Bänder verwendet, die jeweils mit einem eigenen Antrieb versehen sind. Die Antriebsmotoren der Bändertrommeln sind hinsichtlich ihrer Drehzahl und hinsichtlich des aufzubringenden Drehmomentes unabhängig voneinander steuerbar, wodurch die auf die jeweiligen Bändertrommeln einwirkenden Drehmomente unabhängig voneinander vorgebbar sind.

Bei den genannten Lösungen wird der Vorschub der sich ausbildenden Hülse von einem endlosen Förderband bewerkstelligt. Das aus gummiartigem Material gebildete Förderband läuft kreuzverdrillt und schräg zur Achse des Formkerns auf der soeben frisch gebildeten Hülsenoberfläche. Durch den Drall des Förderbandes wird die gewickelte Hülse über den Winkeldorn gezogen und auf diese Weise von der Wickelstation wegbefördert. Dazu ist eine erhebliche Anpreßkraft des Förderbandes an die Hülse erforderlich. Diese erhöht die ohnehin bereits erhebliche Reibkraft weiter. Als Abhilfe wird vorgeschlagen, die Wickeldornoberfläche mit Preßluft zu beaufschlagen.

Dies hat jedoch Nachteile, da sich auf diese Weise an Offset-Druckmaschinen einsetzbare Hülsen, die erheblich genauere Paßgenauigkeiten als die vorgeschlagenen Flexodruckhülsen erfordern, nicht mit der nötigen Präzision fertigen lassen. Die Bildung präziser Hülsen hat zur Grundvoraussetzung, daß die einzelnen Bandwicklungen exakt spaltfrei voreinanderliegen, wobei sich die Steigung der Wickelspirale aus der Bandbreite im Verhältnis zum Wickeldorndurchmesser ergibt. Die in US 5,425,693 und US 5,301,610 vorgeschlagenen Lösungen beinhalten jedoch jeweils eine Variation des Kernaußendurchmessers in axialer Richtung aufgrund der Preßluftbeaufschlagung, so daß sich mittels des als Treibriemens dienenden Förderbandes die benötigte Exaktheit des Vorschubes nicht erzielen läßt.

DE 197 20 551 A1 offenbart eine Basisträgerhülse für Rotationsdruckmaschinen. Ein hülsenförmiger Körper kann auf einen zylindrischen Trägerkörper aufgebracht und von diesem wieder entfernt werden. Eine erste Lage aus einem gewickelten, schmalen Bandmaterial, aufgebracht mit einer ersten Steigung, wird von einem weiteren Material an den Stoßstellen jeweils überdeckt.

DE 197 20 549 A1 bezieht sich auf ein Verfahren zur Herstellung von zylindrischen Beschichtungsträgern. Das dort offenbarte Verfahren umfaßt mehrere Verfahrensschritte, so das Abwickeln eines Materials von einem Materialvorrat und dessen Aufwickeln auf eine es unterstützende Oberfläche. Es ist eine die Selbsteinstellung des Wickelwinkels α ermöglichende pendelbare Lagerung des Materialvorrats während des Vorschubes möglich. Ferner wird die Zugspannung während des Aufwickeln des Materials aufrechterhalten, wobei das Wickelmaterial zwischen der Abwicklung von den Vorratsspulen und der Aufwicklung auf den Wickelzylinder eine reinigende und konditionierende Vorbehandlung erfährt. Zwischen der Abwicklung des Bandmaterials und der Aufwicklung des Bandmaterials auf dem Wickelzylinder erfolgt eine Beschichtung des Materials mit einem Kleber.

Mit der aus DE 197 20 549 A1 bekannten Vorrichtung kann wegen der aus Steifigkeitsgründen notwendigen zweiseitigen Aufnahme eines Wickelzylinders eine kontinuierliche Fertigung von Hülsen im industriellen Maßstab nicht erfolgen.

Der Erfindung liegt die Aufgabe zugrunde, aus Bandmaterial Hülsen mit größter Präzision endlos, kontinuierlich gewickelt herzustellen.

Erfindungsgemäß wird die Aufgabe durch die Merkmale der Patentansprüche 1 und 17 gelöst.

Die mit der erfindungsgemäßen Lösung erzielbaren Vorteile sind vielfältiger Natur. So lassen sich hochpräzise Hülsenkörper für die graphische Industrie in großen Stückzahlen im industriellen Rahmen wirtschaftlich fertigen. Die bisherige Fertigung hochpräziser Hülsen durch Abscheidung in einem Nickelbad, die mit erheblichen Belastungen für die Umwelt einherging, kann vollständig ersetzt werden. Die Fertigung der Hülsen im Nickelbad war zudem sehr teuer und durch die im Nickelbad ablaufenden Abscheidevorgänge sehr zeitraubend. Mittels der erfindungsgemäß vorgeschlagenen Einrichtung läßt sich bei hohen Vorschubgeschwindigkeiten ein rohrförmiger Körper endlos fertigen, von dem beispielsweise mit einer Trenneinrichtung Hülsen mit unterschiedlichen Längen, ob für 24-, 48-, 64- oder 96-Seiten Druckanwendungen abtrennbar sind. Die Fertigung von Hülsen für die graphische Industrie ist somit wesentlich flexibler zu gestalten. Die präzise Ausbildung der Hülsen laßt sich durch bewegbare Oberflächensegmente am Wickelkern herbeiführen, die die Lagen eines kontinuierlich zugeführten Materials aufnehmen und kontinuierlich von der Materialaufgabestelle in Vorschubrichtung voreinanderliegend wegbefördern.

In Weiterentwicklung des erfindungsgemäßen Gedankens wird die Drehbewegung des Wickelkerns in eine translatorische Bewegung der Oberflächensegmente umgewandelt. Dadurch wandert ein Teil der Wickelkernoberfläche permanent nach außen in Hülsenvorschubrichtung, während andererseits nach erfolgter Bildung einer Hülsenwindung die Oberflächensegmente wieder in ihre Ausgangsposition am Wickelkern zurückgesetzt werden. Da die Erzeugung der translatorischen Bewegung der Oberflächensegmente kontinuierlich erfolgt, kann auch der Hülsenkörper kontinuierlich gefertigt werden, da nur eine Einspannstelle am Wickelkern vorgesehen ist und der fertige Hülsenkörper kontinuierlich in eine Richtung wachsen kann, bis er entsprechend seinen benötigten Abmessungen in anwendungsspezifischen Längen abgetrennt werden kann. Der durch die in translatorische Richtung bewegbaren Oberflächensegmente erzeugte Vorschub entspricht pro Umdrehung der Bandbreite des aufzubringenden bandförmigen Materials.

Nach Ausbildung einer schraubenlinienförmig ausgebildeten Windung der Hülse durch die kontinuierliche Vorschubbewegung der Oberflächensegmente in Vorschubrichtung, wird das den Beginn der abgeschlossenen Hülsenwindung aufnehmende Oberflächensegment wieder in seine Ausgangsposition am Wickelkern zurückgesetzt. In einer vorteilhaften Ausgestaltung der erfindungsgemäßen Einrichtung lassen sich die Oberflächensegmente beispielsweise in einer kulissenartigen Nut zwangsführen, wobei die Nut vorteilhaft in einer den Wickelkern umspannenden Buchse aufgenommen sein kann. Die Nut kann einen schraubenlinienförmigen Verlauf nehmen oder derart geneigt angeordnet sein, daß bei einer vollständigen Umdrehung des Wickelkerns eine vollständige Windung der Hülse gefertigt wird. Die Nut ist bevorzugt mit einem Rücksetzabschnitt versehen, so daß die Oberflächensegmente kontinuierlich wieder in ihre Startposition zurücksetzbar sind. Dadurch lassen sich hochpräzise aneinanderstoßende Wickelwindungen zwischenraumfrei erzielen. Die translatorische Bewegbarkeit der Oberflächensegmente wird vorzugsweise durch auf einer Hohlwelle aufgebrachte Führungen unterstützt, die eine gleitende Bewegung der Oberflächensegmente am Wickelkern ermöglichen.

Durch die translatorische Bewegung der Oberflächensegmente am Wickelkern erfolgt ein kontinuierliches Wachsen der Hülsenstrukturwindung in Richtung des freien nicht eingespannten Endes des Wickelkerns. Um ein Rücksetzen der Oberflächensegmente unter den bereits gefertigten Wickelwindungen der Hülsenstruktur in ihre Ausgangsposition zu ermöglichen, sind die Oberflächensegmente ihrerseits vorzugsweise mit einer die Reibung herabsetzenden Beschichtung, wie Messing oder Teflon versehen.

Daneben enthält die erfindungsgemäße Vorrichtung vorzugsweise eine Trenneinheit. Die Trenneinheit trennt je nach benötigter Länge der Hülse Abschnitte von der Hülsenstruktur ab, die je nach Einsatzzweck in einer 24-, 48-, 64- oder 96-Seiten-Rotation ganz unterschiedliche Abmessungen erfordern. Die Trenneinheit ist relativ zur axialen Erstreckung des Wickelkerns einstell- und verfahrbar.

Neben der bereits erwähnten Ausstattung der Oberflächensegmente mit einer Zwangsführung läßt sich die Führung der Oberflächensegmente auch über elektrische Aktuatoren, wie beispielsweise Elektromotoren, realisieren, welche die rotatorisch und die translatorisch ablaufende und miteinander zu koppelnde Bewegung der Oberflächensegmente steuern.

Gemäß des erfindungsgemäß weiterhin vorgeschlagenen Verfahrens zur Herstellung gewickelter Hülsen für die graphische Industrie, wird einem Wickelkern bandförmiges Material zugeführt. Auf der rückwertigen Seite eines der bandförmigen Materialien wird ein Kleber aufgebracht, dann wird das bandförmige Material gleichzeitig, sich überlappend auf die Oberfläche des Wickelkerns aufgebracht. Translatorisch bewegbare Oberflächensegmente erzeugen einen kontinuierlichen Vorschub der sich ausbildenden Hülsenstruktur, von der zyklisch Hülsenabschnitte am freien Ende des Wickelkerns abgetrennt werden.

Mit dem erfindungsgemäßen Wickelverfahren lassen sich Hülsen industriell fertigen, wobei die Abmessungen von abgetrenntem zu abgetrenntem Hülsenabschnitt variieren kann, je nach Verwendungszweck. Zur Einstellung des materialabhängigen, optimalen Bandaufgabewinkels auf den Wickelkern, sind die Wickelmaterialien auf Vorratsspulen aufgenommen, die an einem pendelbaren Lagerschild gelagert sind. Zur Einstellung des Lagerschildes auf den optimalen Bandaufgabewinkel ist am Lagerschild ein Antrieb samt Skalierung vorgesehen. Bandzug und Bandführung lassen sich an der den Vorratsspulen jeweils zugeordneten und individuell einstellbaren Zuggruppen vornehmen. Vorzugsweise nach der Passage der Zuggruppe ist eine Klebeauftragsstation vorgesehen, in der ein Klebeauftrag auf die rückwärtige Seite von einem der zu wickelnden Materialien erfolgt.

Mittels des vorgeschlagenen Verfahrens lassen sich Hülsen für die graphische Industrie industriell produzieren, die mindestens zwei im Halbversatz zueinander aufgebrachte Wickellagen eines bandförmigen Materials aufweisen, die untereinander mittels eines Klebstoffes, vorzugsweise eines aneroben Klebersystems, verbunden sind.

Anhand einer Zeichnung sei die Erfindung nachstehend näher erläutert:

Es zeigt:
- Figur 1: eine erfindungsgemäße Vorrichtung mit abgetrennte Hülsenabschnitte aufnehmender Auffangwanne,
- Figur 2: einen Längsschnitt durch den Wickelkopf der Wickelstation,
- Figur 3: einen Querschnitt durch den Wickelkern,
- Figur 4: einen Querschnitt durch die Überwurfbuchse,
- Figuren 5, 6: jeweils abgewinkelte Verläufe der kulissenartigen Führungsnut für die Oberflächensegmente,
- Figur 7: die Lagerungen für die translatorischen Führungen für die Oberflächensegmente und
- Figur 8: die Draufsicht auf den Wickelkopf der Wickelstation mit im Halbversatz zueinander zugeführten bandförmigen Materialien.

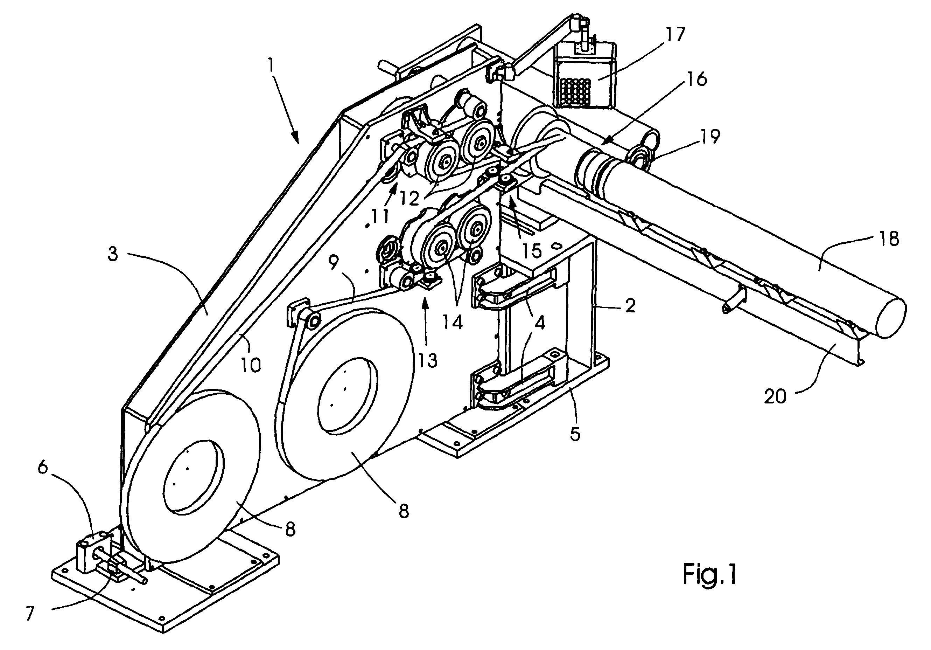

In Figur 1 ist die Ansicht einer erfindungsgemäßen Vorrichtung mit einer abgetrennte Hülsenabschnitte aufnehmenden Auffangwanne dargestellt.

Die Wickelstation 1 umfaßt ein Sockel 2, an welchem in zwei Pendellagerungen 4 ein vorzugsweise doppelwandiger Schild 3 aufgenommen ist. Die Grundplatte 5 des Sockels 2 wird mit der Aufstellfläche, auf der die Wickelstation 1 plaziert wird, verschraubt. Das Lagerschild 3 an dem die die bandförmigen Wickelmaterialien 9, 10 aufnehmenden Materialspulen 8 gelagert sind, kann mittels eines Stellantriebes 6, der eine Stellspindel 7 betätigt, winkelmäßig in Bezug auf die Achse des Wickelkernes 16 eingestellt werden. Die Steigung der Wickelspirale der Hülse 18 erfolgte über die Einstellung des Bandaufgabewinkels auf die Oberfläche des Wickelkernes 16 und steht in direkter Beziehung zur Breite des bandförmigen Wickelmaterials 9, 10 im Verhältnis zum Umfang des Wickelkernes 16.

Die Materialspulen 8 nehmen das auf den Wickelkern 16 aufzubringende bandförmige Wickelmaterial 9, 10 auf, welches nach erfolgter Abwicklung über als Zuggruppen dienende obere und untere Bandführungen 11 bzw. 13 läuft. Mittels an den Bandführungen 11, 13 jeweils vorgesehener Bänderrollen 12, 14, wird der Zug im bandförmigen Wickelmaterial 9, 10 sowohl zum Wickelkern 16 als auch zu den am Lagerschild 3 vorgesehenen Materialspulen 8 gemessen und eingestellt, um optimale Wickelbedingungen je nach verwendetem Wickelmaterial einzustellen. Den oberen bzw. unteren Bandführungen 11, 13 ist eine beiden Wickelmaterialien 9, 10 gemeinsame Klebeauftragsstation 15 zugeordnet. Dort wird entweder auf die Oberseite des zuerst auf die Oberfläche des Wickelkernes auflaufenden Wickelmaterials 9 Klebstoff aufgebracht, oder auf die Unterseite des nach Aufbringen der ersten Wickellage aufzubringenden zweiten Wickelmaterials 10 Kleber aufgebracht. Dazu wird vorzugsweise ein Kleber verwendet, der sehr schnell abbindet. Dabei darf der Kleber jedoch nicht bereits in der Klebeauftragsstation 15 abbinden, sondern soll im Moment des Kontaktes beider zu wickelnden Wickelmaterialien 9, 10 seine volle Festigkeit augenblicklich erreichen. Dazu werden anärobe Kleber eingesetzt.

Im Sockel 2 der Wickelstation 1 ist der Wickelkern 16 gelagert, der mit einem Antrieb in Verbindung steht. Am Lagerschild 3 ist das Bedienpult 17 der Wickelstation 1 aufgenommen, an dem beispielsweise die Drehzahl des Antriebes des Wickelkernes 16, der Aufgabewinkel der bandförmigen Wickelmaterialien 9, 10 sowie die zu verarbeitende Bandbreite der bandförmigen Wickelmaterialien 9, 10 einstellbar sind. Dem Wickelkern 16 ist ferner eine Trennvorrichtung 19 zugeordnet, die parallel zur Achse des Wickelkernes 16 positionierbar ist, so daß von der sich durch das kontinuierliche Aufwickeln bildenden Hülsenstruktur 18 jeweils individuelle Abschnitte abtrennbar sind. Nach erfolgter Abtrennung von der kontinuierlich wachsenden Hülse ― wobei sich die Trennvorrichtung entsprechend des axialen Vorschubs der Hülse 18 parallel zur Hülse 18 mitbewegt ― wird der Abschnitt der Hülse 18 von einer Auffangwanne 20 aufgenommen. Aus dieser kann er leicht entnommen und einer Weiterverarbeitung, wie beispielsweise der Entgratung oder der Oberflächenreinigung und -konditionierung problemlos zugeführt werden. Parallel dazu erfolgt der weitere axiale Vorschub der kontinuierlich sich ausbildenden Hülsenstruktur 18. Je nach Verwendung in einer 23-, 48-, 64- oder 96-Seiten-Rotation, kann am Bedienpult 17 die jeweils abzutrennende Länge des abzutrennenden Hülsenabschnittes 19 vorgegeben werden.

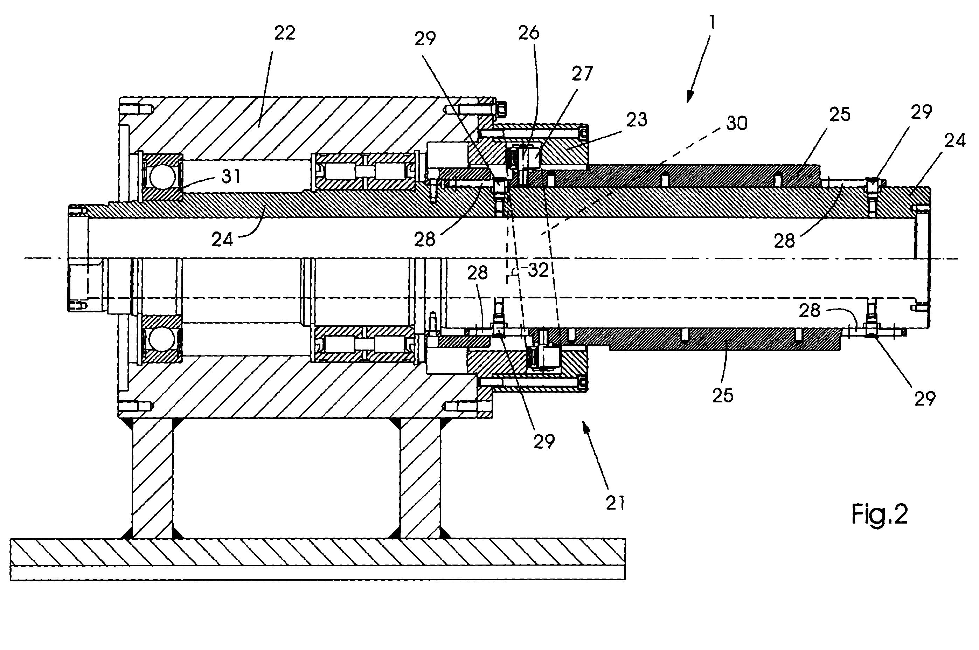

Figur 2 zeigt den Längsschnitt durch den Wickelkopf der Wickelstation 1.

In einem Lagergehäuse 22 ist die angetriebenen Hohlwelle 24 drehbar aufgenommen, deren Antrieb jedoch hier nicht näher dargestellt ist. Die Hohlwelle ist in Hohlwellenlagern 31 drehbar gelagert und erstreckt sich über das Gehäuseende, an dem eine Überwurfbuchse 23 angeflanscht ist, hinaus bis zu ihrem freien Ende. Auf der Mantelfläche der Hohlwelle 24 sind translatorische Oberflächensegmentführungen 28 vorgesehen, die durch Führungslager 29 an der Hohlwelle 24 befestigt sind. Die Oberflächensegmente 25 werden jeweils an solchen, sich in axialer Richtung erstreckenden Führungen 28 gleitend geführt.

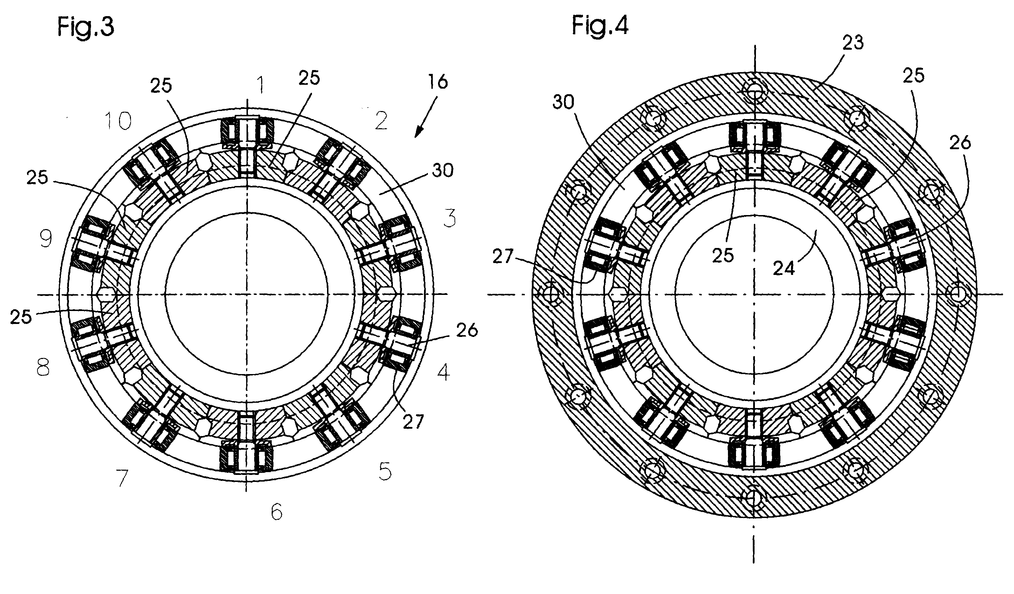

Im in Figur 2 dargestellten Ausführungsbeispiel ist am Gehäuse 22 eine Überwurfbuchse 23 angeflanscht, welche die Hohlwelle 24 samt daran bewegbarer Oberflächensegmente 25 umfängt. In die Überwurfbuchse 23 ist eine rotatorische Oberflächensegmentführung 30 eingelassen, die einen etwa schraubenlinienförmigen Verlauf durch die Buchse 23 nimmt, und beispielsweise als umlaufende Nut ausgebildet sein kann. In diese greifen vorzugsweise als Rollkörper 27 ausgebildete Führungselemente ein, die an Führungsbolzen 26 an den jeweiligen Oberflächensegmenten 25 ausgebildet sind. Im Längsschnitt gemäß Figur 2 ist die rotatorische Oberlfächensegmentführung 30 beispielsweise um den Neigungswinkel 32 geneigt angeordnet und als endlos umlaufende Nut in der Überwurfbuchse 23 angeordnet. Bei einer Rotation der Hohlwelle 24 rollen die Rollkörper 27 an den Seitenflächen der Führungen 30 ab und prägen den jeweiligen Oberflächensegment 25 eine translatorische, auf das freie Ende der Hohlwelle 24 hin gerichtete axiale Bewegung auf. Der Außenumfang des durch die Oberflächensegmente 25 gebildeten Wickelkerns 16 entspricht dem benötigten Innendurchmesser der zu wickelnden Hülse 18. Die Mantelfläche des Wickelkerns 16 läßt sich beispielsweise durch zehn gleich Oberflächensegmente 25 bilden, wie dies in Figur 3 dargestellt ist. Jedes der Oberflächensegmente 25 läuft in einer translatorischen Führung 28. Die in Figur 2 dargestellte rotatorische Oberflächensegmentführung 30 ist als umlaufende Nut ausgebildet, deren Enden in Umfangsrichtung nicht direkt voreinanderlaufen, sondern deren Versatz zueinander genau der Bandbreite des zu verarbeitenden Wickelmaterials 9, 10 entspricht.

Figur 3 zeigt den Querschnitt durch den Wickelkern 16. Auf der Hohlwelle 24 sind senkrecht zur Zeichenebene verschiebbare Oberflächensegmente 25, die mit eins bis zehn benummert sind, aufgenommen, welche vorzugsweise alle von gleicher Bauart sind. Jedem der Oberflächensegmente 25 ist ein an einem Führungsbolzen 26 gelagerter Rollkörper 27 zugeordnet, der in die als Nut ausgebildete rotatorische Oberflächensegmentführung 30 eintaucht und durch deren Verlauf im Umfangsrichtung bei der Rotation der Hohlwelle 24 entsprechend bewegt wird.

In Figur 4 ist ein Querschnitt durch die Überwurfbuchse 23 dargestellt, die am Lagergehäuse 22 befestigt werden kann und in welcher die rotatorische Oberflächensegmentführung 30 als umlaufende Nut ausgebildet ist. An dieser sind jedoch hier nur die seitlichen, die Rollkörper 27 führenden Flächen zu erkennen; der Verlauf in Umfangsrichtung geht aus Figur 2 hervor.

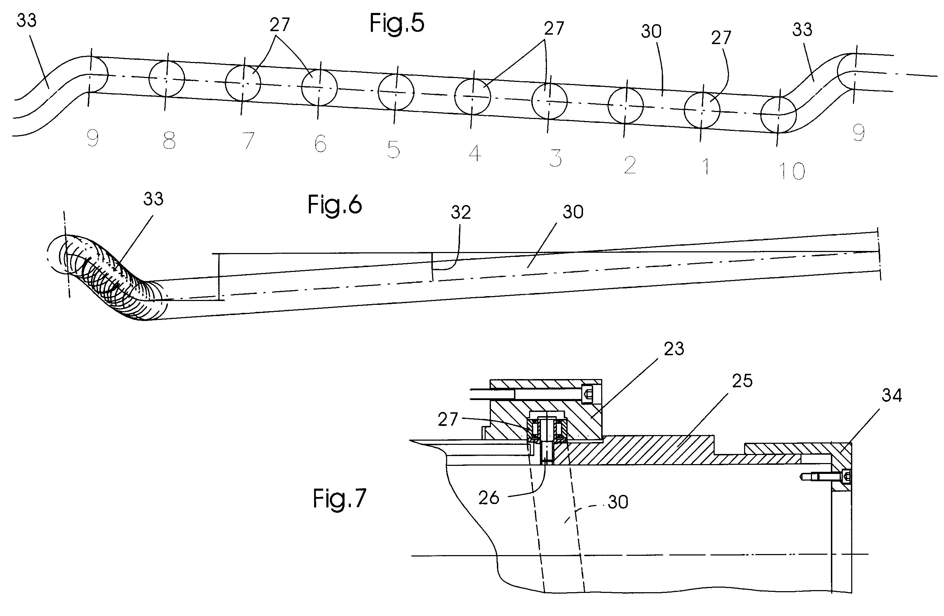

Figur 5 zeigt den abgewickelt dargestellten Verlauf der rotatorischen Oberflächensegmentführung 30. Die jeweiligen Enden der als umlaufende Nut ausgebildeten Führung 30 werden beispielsweise durch ein Rollkörperrücklauf 33 ― einem Übergangsbereich ― miteinander verbunden. Der Übergangsbereich verbindet die beiden Oberflächensegment-Schiebe-Endlagen miteinander, so daß bei Passage eines Rollkörpers 27 das entsprechende Oberflächensegment 25 wieder in seiner Ausgangslage zurückgestellt werden kann. Das Segment 25 wird dadurch unter dem bereits fertig gewickelten Bereich der Hülsenstruktur 18 weggezogen und steht zur Ausbildung einer neuen Hülsenwindung wieder zur Verfügung. Da während des kontinuierlich erfolgenden Wickelvorganges jeweils immer nur eines der Oberflächensegmente 25 durch die Passage des Rollkörperrücklaufes 33 entgegen der Vorschubrichtung des Wickelkerns 16 zurückbewegt wird, zur selben Zeit jedoch eine Vorschubbewegung des Wickelkerns 16 durch die übrigen (z.B. 9) Oberflächensegmente 25 erfolgt, ergibt sich insgesamt eine Vorschubbewegung des gesamten Wickelkernes 16. Die in jeweils unterschiedlichen Positionen dargestellten Rollkörper 27 in der Führung 30 entsprechen jeweils unterschiedlich weit in Richtung auf das freie Ende des Wickelkernes 16 ausgefahrenen Oberflächensegmenten 25.

Figur 6 zeigt die Passage des Rollkörperrücklaufes 33 durch einen Rollkörper 27. Aus Figur 6 geht der Neigungswinkel 32 hervor, um den die Enden der abgewinkelt dargestellten Umfangsnut 30 als rotatorische Oberflächensegmentführung 30 zueinander versetzt sind. Der Versatz dieser beiden Enden wird durch den Verlauf des als Rollkörperrücklaufes 33 dienenden Übergangsbereiches geschlossen, so daß eine ununterbrochene Führung für die Rollkörper 27 der Oberflächensegmente 25 entsteht.

Figur 7 zeigt schematisch den Endbereich der Hohlwelle 24. An diesem werden die an Führungen verschiebbaren Oberflächensegmente 25 von einer topfförmigen Überwurfgleitführung 34 umschlossen, die am freien Ende der Hohlwelle 24 angeflanscht ist. Die Überwurfgleitführung 34 überdeckt die Oberflächensegmente 25 teilweise.

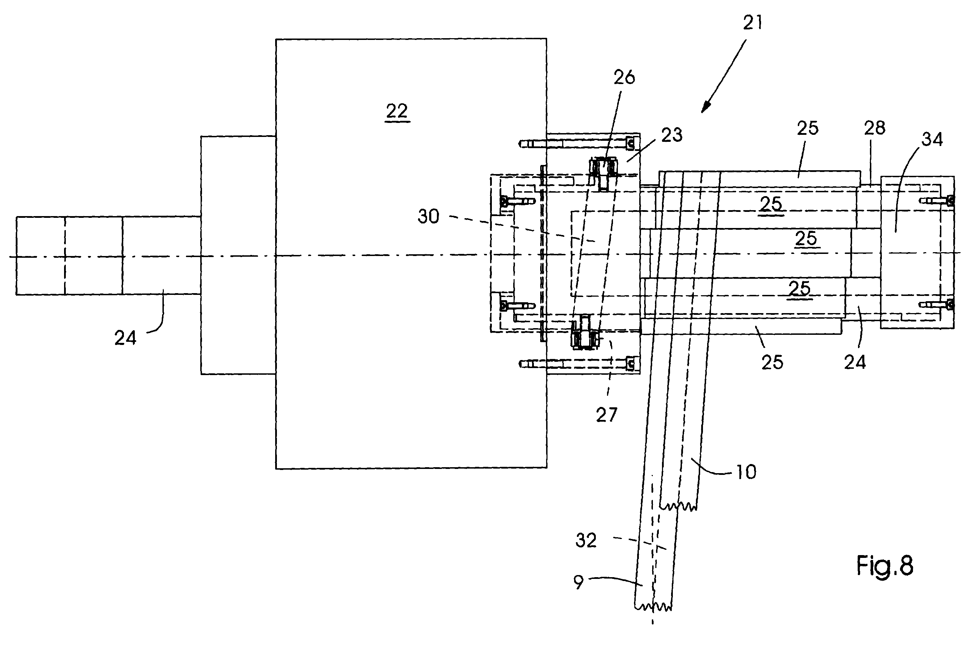

Anhand der Figur 8, welche die Draufsicht auf den Wickelkopf 21 zeigt, sei das erfindungsgemäße Herstellungsverfahren zur kontinuierlichen endlosen Herstellung von Hülsen näher beschrieben.

Vom hier nicht näher dargestellten Lagerschild 3 laufen die bandförmigen Wickelmaterialien 9, 10 im Halbversatz zueinander orientiert, unter dem Materialaufgabewinkel 32 relativ zum Wickelkern 16 auf die Oberflächensegmente 25 auf. In der dargestellten Anordnung überdeckt das zweite bandförmige Wickelmaterial 10 das erste bandförmige Wickelmaterial 9 etwa zur Hälfte. Die Oberflächensegmente 25 sind entsprechend der Position der Führungselemnte 27 in der rotatorischen Oberflächensegmentführung 30 axial positioniert, wobei deren Neigung exakt der Bandbreite des bandförmigen Wickelmaterials 9 bzw. 10 entspricht. Gemäß der Anordnung der rotatorischen Oberflächensegmentführung 30 erfolgt der Vorschub der Oberflächensegmente 25 vom Start der jeweiligen Windung der Hülse 18 weg, nach außen; es werden neun von zehn Oberflächensegmenten 25 kontinuierlich nach außen gefördert, während jeweils eines der Oberflächensegmente 25 durch Passage des Rolkörperrücklaufes 33 in der rotatorischen Oberflächensegmentführung 30 unter dem fertig gewickelten Bereich der Hülse 18 zurückgezogen und in seiner Ausgangsstellung positioniert wird.

Bevor das zweite bandförmige Wickelmaterial 10 auf das zuerst auf den Wickelkern 16 aufgebrachte Wickelmaterial 9 aufgebracht wird, wird es auf seiner Rückseite mit einem Kleber mit hoher Schichtstärkenpräzision versehen, so daß es bei Kontakt mit dem ersten Wickelmaterial 9 zum Verkleben der Wickellage der Wickelmaterialien 9 und 10 miteinander kommt. Da die beiden Wickelmaterialien 9, 10 vorzugsweise etwa im Halbversatz zueinander aufgetragen werden, werden die Stoßstellen des Wickelmaterials 9 der ersten Wickellage von der Bandbreite der Wicklungen des zweiten Wickelmaterials 10 überdeckt, was die Steifigkeit der Hülsenstruktur 18 erheblich erhöht. In zyklischen Intervallen können mittels der Trenneinrichtung 19 Abschnitte von der Hülsenstruktur 18 abgetrennt werden, die je nach Verwendung in einer 24-, 48-, 64- oder 96-Seiten-Rotation als Grundkörper für Übertragungsträgerhülsen oder Druckformhülsen eingesetzt werden können.

Zur Einstellung der Zugspannung in den zu wickelnden bandförmigen Wickelmaterialien 9 und 10 sind Zuggruppen vorgesehen, die als obere bzw. untere Bahnführung 11, 13 ausgebildet, sein kann und die vorzugsweise mittels Rollen 12, 14 die Spannung im Materialaufbau und beim Wickeln aufrechterhalten. Dazu sind den Materialspulen 8, die zur Aufnahme der bandförmigen Wickelmaterialien 9 und 10 am Lagerschild 3 dienen, jeweils Bremsen zugeordnet. Die an den Hülsenstrukturen 18 jeweils einzustellende Hülsensteigung erfolgt durch Einstellung des Bandaufgabewinkels 32. Die Steigung der Wickelspirale steht in direkter Beziehung von Bandbreite der Wickelmaterialien 9 und 10 zum Umfang des Wickelkerns 16. Durch die pendelbare Lagerung der den Materialvorrat an bandförmigen Wickelmaterialien 9 und 10 aufnehmenden Materialspulen 8, läßt sich der Bandaufgabewinkel 32 exakt an das jeweils zu wickelnde Material anpassen.

Die Produktionsgeschwindigkeit des erfindungsgemäßen Herstellungsverfahrens hängt maßgeblich von den erreichbaren Vorschubgeschwindigkeiten ab, die z.B. zwischen 100 bis 500 mm/min fertig gewickelter Hülsenlänge liegen. Mittels des erfindungsgemäßen Verfahrens lassen sich durch einen hochpräzisen Bandzug, eine exakt vorgebbare Steigung sowie eine minimale Kleberschichtstärke hochpräzise maßhaltige Hülsen 18 fertigen. Die Durchmesserpräzision ergibt sich aus dem Außendurchmesser des Wickelkernes 16 und dem Zug im Bandmaterial 9, 10 im Verhältnis zur Bandstärke.

Die mittels des erfindungsgemäßen Verfahrens gefertigten Hülsen sind als Basisträgerhülsen für Gummituchzylinderhülsen, oder Druckformhülsen, die hochgenaue Anforderungen an die Maßhaltigkeit stellen, beispielsweise im Offset-Verfahren, sei es für Akzidenz- oder für Zeitungsdruckapplikationen extrem wirtschaftlich einsetzbar.

### Bezugszeichenliste

- 1: Wickelstation
- 2: Sockel
- 3: Schild
- 4: Pendellagerung
- 5: Sockelfuß
- 6: Pendelantrieb
- 7: Spindel
- 8: Materialspule
- 9: erstes bandförmiges Wickelmaterial
- 10: zweites bandförmiges Wickelmaterial
- 11: obere Bandführung
- 12: Bänderrollen
- 13: untere Bandführung
- 14: Bänderrollen
- 15: Klebeauftragsstation
- 16: Wickelkern
- 17: Bedienpult
- 18: Hülse
- 19: Trennvorrichtung
- 20: Auffangwanne
- 21: Wickelkopf
- 22: Lagergehäuse
- 23: Überwurfbuchse
- 24: Hohlwelle
- 25: Oberflächensegment
- 26: Führungsbolzen
- 27: Rollkörper
- 28: translatorische Oberflächensegmentführung
- 29: Führungslager
- 30: rotatorische Oberflächensegmentführung
- 31: Hohlwellenlager
- 32: Neigungswinkel
- 33: Rollkörperrücklauf
- 34: Überwurfgleitführung

## Patentansprüche

1. Vorrichtung zur Herstellung von Hülsen (18) für die graphische Industrie aus bandförmigem Wickelmaterial (9, 10), welches einem angetriebenen Wickelkern (16) kontinuierlich zugeführt wird, dadurch gekennzeichnet, daß an dem Wickelkern (16) eine Anzahl von Oberflächensegmenten (25) vorgesehen ist, die während des Wickelvorganges der Hülse (18) in der Weise bewegbar sind, daß eine im wesentlichen kontinuierliche Vorschubbewegung der Hülse (18) erfolgt.

2. Vorrichtung gemäß Anspruch 1, dadurch gekennzeichnet, daß die Oberflächensegmente (25) eine translatorische Bewegung durchführen.

3. Vorrichtung gemäß Anspruch 1 oder 2, dadurch gekennzeichnet, daß die Mehrzahl der Oberflächensegmente (25) während des Wickelvorganges in Vorschubrichtung der Hülse (18) bewegt werden, während mindestens eines der Oberflächensegmente (25) entgegen der Vorschubrichtung der Hülse (18) zurückbewegt wird.

4. Vorrichtung gemäß Anspruch 3, dadurch gekennzeichnet, daß nach Abschluß einer vollständigen Umdrehung des Wickelkernes (16), das den Beginn der abgeschlossenen Hülsenwindung aufnehmende Oberflächensegment (25) in seine Ausgangsposition am Wickelkern (16) zurückbewegt wird.

5. Vorrichtung nach einem der Ansprüche 2 bis 4, dadurch gekennzeichnet, daß die translatorische Bewegung aller Oberflächensegmente (25) während einer Umdrehung des Wickelkernes (16) der Bandbreite des bandförmigen Wickelmateriales (9, 10) entspricht.

6. Vorrichtung nach einem der Ansprüche 2 bis 5, dadurch gekennzeichnet, daß die Bewegung der Oberflächensegmente (25) durch Zwangsführung in einer Segmentführung (30) erfolgt.

7. Vorrichtung nach Anspruch 6, dadurch gekennzeichnet, daß die Segmentführung (30) einen Rücksetzabschnitt (33) für die Oberflächensegmente (25) umfaßt.

8. Vorrichtung nach Anspruch 6 oder 7, dadurch gekennzeichnet, daß die Segmentführung (30) als umlaufende Nut in einer den Wickelkern (16) umfangenden Buchse (23) ausgebildet ist.

9. Vorrichtung nach einem der Ansprüche 6 bis 8, dadurch gekennzeichnet, daß die Oberflächensegmente (25) mit in die Segmentführung (30) eingreifenden Führungselementen (26, 27) versehen sind.

10. Vorrichtung nach einem der Ansprüche 2 bis 9, dadurch gekennzeichnet, daß die Oberflächensegmente (25) auf translatorischen Segmentführungen (28) bewegbar sind.

11. Vorrichtung gemäß Anspruch 10, dadurch gekennzeichnet, daß die translatorischen Segmentführungen (28) an einer den Wickelkern (16) bildenden Hohlwelle (24) ausgebildet sind.

12. Vorrichtung gemäß einem der Ansprüche 6 bis 11, dadurch gekennzeichnet, daß die Segmentführung (30) schraubenlinienförmig verläuft und pro Umdrehung des Wickelkernes (16) einen Vorschub der Hülse (18) um eine Windung erzeugt.

13. Vorrichtung nach einem der Ansprüche 1 bis 5, dadurch gekennzeichnet, daß die Bewegung der Oberflächensegmente (25) mittels diesen jeweils zugeordneten elektrischen Aktuatoren erfolgt.

14. Vorrichtung nach Anspruch 13, dadurch gekennzeichnet, daß die elektrischen Aktuatoren als Elektromotoren ausgebildet sind.

15. Vorrichtung nach einem der vorhergehenden Ansprüche, dadurch gekennzeichnet, daß die Oberflächensegmente (25) mit einer die Reibung herabsetzenden Beschichtung versehen sind.

16. Vorrichtung nach einem der vorhergehenden Ansprüche, dadurch gekennzeichnet, daß dem Wickelkern (16) eine in Vorschubrichtung der Hülse (18) verfahrbare und einstellbare Trennvorrichtung (19) zugeordnet ist.

17. Verfahren zur endlosen, kontinuierlichen Herstellung gewickelter Hülsen für die graphische Industrie gekennzeichnet durch die folgenden Verfahrensschritte:
- Zuführen von bandförmigen Wickelmaterialien (9, 10) zu einem rotierenden Wickelkern (16),
- Aufbringen eines Klebers auf die rückwertige Seite eines der bandförmigen Wickelmaterialien (9, 10),
- Aufbringen der sich überlappenden bandförmigen Wickelmaterialien (9, 10) auf die Oberfläche des Wickelkernes (16),
- kontinuierliches Vorschieben der sich ausbildenden Hülsenstruktur (18) durch translatorisch bewegbare Oberflächensegmente (25) und
- Abtrennen eines Hülsenabschnittes von der gebildeten Hülsenstruktur (18).

18. Verfahren gemäß Anspruch 17, dadurch gekennzeichnet, daß das Aufbringen der bandförmigen Wickelmaterialien (9, 10) zeitgleich erfolgt.

19. Verfahren nach Anspruch 17 oder 18, dadurch gekennzeichnet, daß die bandförmigen Wickelmaterialien (9, 10) auf relativ zum Wickelkern (16) einrichtbaren Vorratsspulen (8) aufgenommen sind.

20. Verfahren nach einem der Ansprüche 17 bis 19, dadurch gekennzeichnet, daß das Abtrennen eines Hülsenabschnittes während des Wickelvorganges von der sich kontinuierlich bildenden Hülsenstruktur (18) durch Mitbewegen einer Trennvorrichtung (19) in Vorschubrichtung der Hülse (18) erfolgt.

21. Verfahren nach einem der Ansprüche 17 bis 20, dadurch gekennzeichnet, daß die Spannung im zugeführten bandförmigen Material (9, 10) während des Wickelvorganges meß- und einstellbar ist.

22. Verfahren gemäß einem der Ansprüche 17 bis 21, dadurch gekennzeichnet, daß die Steigung der sich am Wickelkern (16) ausbildenden Wickelspirale über den Aufgabewinkel der bandförmigen Wickelmaterialien (9, 10) einstellbar ist.

23. Hülse (18), gefertigt gemäß dem Verfahren nach einem der Ansprüche 17 bis 22.
